(19) Europäisches Patentamt
European Patent Office
Office européen des brevets

(11) Publication number: **0 385 278 A1**

# (12) EUROPEAN PATENT APPLICATION

(21) Application number: **90103472.8**

(51) Int. Cl.[5]: **C08K 3/32, C08L 81/02**

(22) Date of filing: **22.02.90**

(30) Priority: **27.02.89 JP 43169/89**

(43) Date of publication of application:
**05.09.90 Bulletin 90/36**

(84) Designated Contracting States:
**BE DE GB**

(71) Applicant: **Tohpren Co., Ltd.**
**11-5, Kitasode Sodegauramachi**
**Kimitsu-gun Chiba(JP)**

(72) Inventor: **Aritomo, Michio**
**596-504, Konakadai-machi**
**Chiba-shi, Chiba(JP)**
Inventor: **Nakamura, Yoshiaki**
**8-101, Takahama 4-10**
**Chiba-shi, Chiba(JP)**
Inventor: **Shinohara, Shuya**
**16-3, Kasuga 2-chome**
**Chiba-shi, Chiba(JP)**
Inventor: **Egawa, Hirotaka**
**98-4207, Daijuku, Sodegaura-machi**
**Kimitsu-gun, Chiba(JP)**

(74) Representative: **Vossius & Partner**
**Siebertstrasse 4 P.O. Box 86 07 67**
**D-8000 München 86(DE)**

## (54) Polyarylene sulfide resin composition having stabilized hue.

(57) Thermal degradation or thermal crosslinking of a polyarylene sulfide resin at the melt-shaping step and the coloration of the resin can be minimized by incorporating 0.03 to 5 parts by weight of hypophosphorous acid or an alkali metal salt or alkaline earth metal salt thereof in 100 parts by weight of the polyarylene sulfide resin.

EP 0 385 278 A1

## POLYARYLENE SULFIDE RESIN COMPOSITION HAVING STABILIZED HUE

This invention relates to the stabilization of the hue of a polyphenylene sulfide resin (hereinafter referred to as "PPS") at the melt shaping thereof. More particularly, it relates to a PPS composition in which coloration is prevented at the melt shaping step without an occurrence of a thermal degradation or thermal crosslinking of the polymer.

PPS is a thermoplastic resin having excellent properties such as heat resistance, chemical resistance, and dimensional stability of a shaped article, and PPS is mainly utilized as an automobile part, an electric or electronic part, a machine part and the like. Nevertheless, the shaped article of PPS has a brown color, and thus a coloring of the shaped article is drastically restricted and the use of the shaped article is limited.

The application of PPS to films and fibers has been investigated, but for this application, the PPS must be linear and have a sufficiently high molecular weight and furthermore, the coloration must be reduced, that is, the polymer should be colorless. A product obtained by increasing the molecular weight by thermally crosslinking a conventional low-molecular-weight polymer has poor physical properties, and this product has a problem in that the polymer is colored brown. The present invention is intended to provide a composition in which the foregoing defects are eliminated.

Most commercially available PPS products are prepared by increasing the molecular weight, by heat-treating PPS having a relatively low molecular weight in the presence of oxygen to cause a crosslinking or branching reaction, but PPS having the molecular weight increased by this method has various problems. For example, the coloration is conspicuous, and since many crosslinked and branched structures are present, the mechanical strength is low. As the means for solving this problem, there have been proposed methods in which various polymerization assistants are used during the reaction (see JP-A-52-12240, JP-A-59-219332 and U.S. Patent No. 4,038,263), and methods in which water is added after a first stage reaction, and a second stage reaction is then carried out at a higher temperature (see JP-A-61-7332).

According to these methods, a PPS polymer having a linear structure and an increased molecular weight can be obtained without crosslinking or branching, and the coloration is controlled in the formed PPS.

Nevertheless, even if this PPS having a linear structure, a sufficiently high molecular weight and a reduced coloration is used, in a pelletizing method customarily adopted on an industrial scale, that is, a method in which a powdery polymer is heated, melted and extruded by using an extruder to effect pelletization, a radical or peroxide is generated due to the influences of oxygen and the like, to cause coloration, and therefore, a shaped article having a reduced coloration is difficult to obtain.

As the improved method for controlling the coloration, a method in which the coloration at the pelletization is prevented by adding an organic phosphinic acid such as phenylphosphinic acid or an organic phosphite such as dioctyl phosphite before the pelletization is disclosed in JP-A-47-1735, and a method in which at least one member selected from the group consisting of amine derivatives, phenol derivatives, hydroquinone derivatives, phosphorous acid esters and alkyl thioethers is added to prevent the coloration, is disclosed in JP-A-59-213759.

Nevertheless, from the results of experiments made by the present inventors, it was found that, in these methods, the heat resistance of these coloration-preventing agents is low, and if the pelletization temperature is higher than 300° C, decomposition or volatilization occurs and the coloration-preventing effect is not satisfactory.

Furthermore, JP-A-62-97821 discloses a method in which a reactor having a reaction liquid-contacting portion composed of titanium is used during the reaction, and after the reaction, an effective amount of a halogen-substituted organic compound is added and the reaction is conducted again to stabilize the terminals of the molecule. According to this method, the coloration-preventing effect can be obtained to a certain extent, but the effect is still insufficient and a high whiteness cannot be easily obtained.

In the field where a film, a fiber and a molded article are colored, it is a requisite that the Hunter whiteness after pelletization be higher than 35%, especially at least 40%. A primary object of the present invention is to satisfy this requisite and provide a polyarylene sulfide resin having a Hunter whiteness higher than 40%.

In accordance with the present invention, there is provided a polyarylene sulfide resin composition comprising 100 parts by weight of a polyarylene sulfide resin and, incorporated therein, 0.03 to 5 parts by weight of at least one member selected from the group consisting of hypophosphorous acid and alkali metal salts and alkaline earth metal salts of hypophosphorous acid.

The polyarylene sulfide resin to be stabilized according to the present invention is a polymer consisting essentially of recurring units -R-S- (in which R represents an aryl group). Preferably, there can be

mentioned polymers comprising p-phenylene groups as the recurring units and being represented by the formula

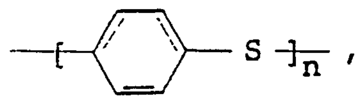

and random and block copolymers comprising p-phenylene groups as the main component and minor amounts of other arylene groups such as m-phenylene groups

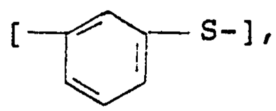

o-phenylene groups

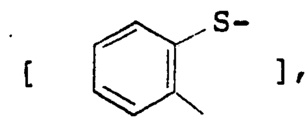

alkyl-substituted phenylene groups

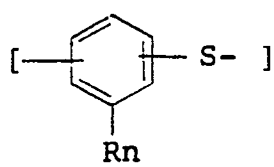

(in which R represents a lower alkyl group), p,p′-diphenylene-sulfone groups

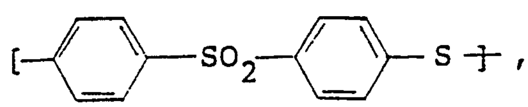

p,p′-biphenylene groups

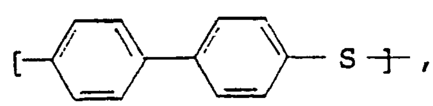

p,p′-diphenylene-ether groups

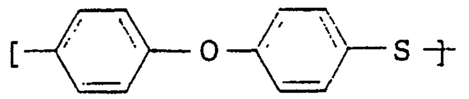,

p,p'-diphenylene-carbonyl groups

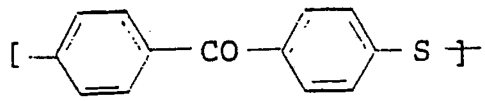

and naphthalene groups

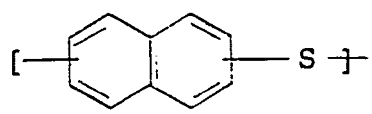.

These polyarylene sulfide resins can be used in the form of a mixture of two or more thereof. A polyphenylene sulfide resin (PPS) such as a poly-p-phenylene sulfide resin is especially preferable.

As the PPS, there can be mentioned PPS obtained by a method in which an alkali metal sulfide is reacted with a polyhalogenated aromatic compound in an organic amide solvent, disclosed in JP-B-45-3368; high-molecular-weight PPS obtained by using various polymerization assistants such as alkali metal carboxylates, alkali metal salts of aromatic carboxylic acids and alkali metal halides; PPS obtained by reacting an alkali metal halide with a polyhalogenated aromatic compound at 180 to 235° C in the initial stage until the conversion reaches 50 to 98%, adding water to the reaction mixture, and carrying out the second stage polymerization at a higher temperature; PPS obtained by reacting an alkali metal sulfide with a polyhalogenated aromatic compound in an organic amide solvent, washing the reaction mixture in the hot state with an organic amide solvent to remove the polymerization inhibitor and unreacted substance, and further, carrying out the reaction at 200 to 260° C; and branched PPS obtained by carrying out the polymerization while adding a branching agent such as 1,3,5-trichlorobenzene.

Hypophosphorous acid used in the present invention is expressed by the chemical formula of $HPH_2O_2$ and is used in the form of an aqueous solution having a concentration of 30 to 50% by weight. As the alkali metal salt of hypophosphorous acid, there can be mentioned lithium hypophosphite, sodium hypophosphite and potassium hypophosphite, and as the alkaline earth metal salt of hypophosphorous acid, there can be mentioned calcium hypophosphite and magnesium hypophosphite. These metal salts of hypophosphorous acid and hypophosphorous acid are herein generically called as hypophosphorous acid compound.

The amount of the hypophosphorous acid compound added as the coloration-inhibiting agent is 0.03 to 5 parts by weight, preferably 0.1 to 1 part by weight as the hypophosphorous acid compound per 100 parts by weight of the polyarylene sulfide resin. If the amount of the hypophosphorous acid compound added is smaller than 0.03 part by weight, the coloration-preventing effect is not satisfactory. If the amount of the hypophosphorous acid compound used exceeds 5 parts by weight, no further increase of the coloration-preventing effect can be expected and the use of such a large amount of the hypophosphorous acid compound is not preferable from the economical viewpoint.

In connection with the time of addition of the hypophosphorous acid compound as the coloration-preventing agent, the hypophosphorous acid compound is preferably added just before the pelletization of the polyarylene sulfide resin or before the drying step, which is the final step of the preparation process. For the addition of the hypophosphorous acid compound, there can be adopted a method in which the resin is mixed with the coloration-preventing agent at normal temperature or elevated temperature directly or after dilution or dissolution in an appropriate solvent, followed by the removal of the solvent used, e.g., by evaporation. As the solvent used, there can be mentioned water, methanol, ethanol and acetone. These solvents can be used alone or in the form of a mixture of two or more thereof. Where the coloration-preventing agent is added to the wet cake before the drying step, since the wet cake contains a large amount of water, a usual surface active agent such as sodium oleate can be used to increase the mixing effect.

The mechanism of the coloration of PPS at a high temperature has not been sufficiently elucidated theoretically, but it is considered that the coloration is probably due to a generation of free radicals and peroxides by oxygen in air. The hypophosphorous acid compound used as the coloration-preventing agent

belongs to a reducing agent, and it is considered that this compound probably exerts an effect of generating active hydrogen at a high temperature and trapping oxygen. The hypophosphorous acid compound as the coloration-preventing agent shows a sufficient coloration-preventing effect even with a small amount, and does not cause undesirable reactions such as the crosslinking reaction at the pelletization.

If the hypophosphorous acid compound as the coloration-preventing agent is added to PPS powder obtained through a customary treatment method, for example, a method in which the reaction slurry (i.e., a mixture comprising PPS, sodium chloride formed as the by-product and the organic amide solvent) is filtered, the solid is washed with water several times to remove sodium chloride formed as the by-product and the residue is dried, there can be provided a resin composition satisfying the requirement of the Hunter whiteness of at least 40%. To enhance the effect, preferably the amount of the residual solvent used for the reaction in the resin is reduced as much as possible. As the method of removing the organic amide solvent left in the resin, a method is preferably adopted in which the resin from which the organic amide solvent has been separated after the reaction is washed with another organic solvent several times at an ambient temperature or elevated temperature. As the organic solvent used for this purpose, there can be mentioned alcohols such as methanol, ethanol and isopropanol, ketones such as acetone, methyl ethyl ketone and methyl isobutyl ketone, aromatic hydrocarbons such as benzene, toluene and xylene, and halogenated hydrocarbons such as 1,1,2,2-tetrachloroethane, trichloroethylene and carbon tetrachloride.

To enhance the effect of the present invention, preferably the content of the heavy metal ion (mainly iron ion) in the polyarylene sulfide resin is controlled to as low a level as possible. To reduce the content of the heavy metal ion in the resin, a liquid-contacting portion of a resin-preparing apparatus such as a reactor is constructed by a non-ferrous metal (such as titanium) and an alkali metal sulfide (such as sodium sulfide) and a polyhalogenated aromatic compound (such as dichlorobenzene), which are substantially free of a heavy metal ion, are used as the starting materials.

The polyarylene sulfide having a stabilized color hue, obtained according to the process of the present invention, can be shaped into a film, a sheet, a fiber and other extrusion shaped articles, and can be molded into an automobile part, an electric or electronic part, a machine part and the like by injection molding, extrusion molding or the like.

An ultraviolet absorber, a metal deactivating agent, a colorant, a lubricant, a crystal nucleating agent, carbon black, calcium carbonate, a powdery filler such as silica powder and a fibrous reinforcer such as a carbon fiber or glass fiber can be incorporated into the polyphenylene sulfide resin of the present invention.

Furthermore, the resin composition of the present invention can be used in the form of a mixture with at least one synthetic resin selected from the group consisting of polycarbonate, polyphenylene oxide, polysulfone, polyacetal, polyimide, polyamide, polystyrene, polyester and ABS.

The present invention will now be described in detail with reference to the following examples. In the examples, all of "%" are by weight unless otherwise indicated.

The characteristic values of the resin powder and resin composition were determined according to the following methods under the following conditions.

Color Hue

The coloring property of the resin was evaluated based on the Hunter whiteness. The Hunter whiteness was measured by a color difference meter (Model TC-8600 supplied by Tokyo Denshoku). A resin sample for the measurement of the Hunter whiteness was prepared in the following manner. The resin was pelletized as a primary melt-molded product at a temperature of 300 °C by using a twin-screw extruder having a cylinder made of nitriding steel, and the pellet was preheated at 325 °C for 3 minutes in a nitrogen current by using a hot press and pressed at 325 °C for 1 minute to mold the pellet into a sheet. The obtained sheet was rapidly cooled, and the obtained amorphous sheet having a thickness of about 2 mm was used as the sample.

Melt Viscosity

The melt viscosity of the pellet obtained at the above-mentioned test of the color hue was measured at a temperature of 300 °C for a preheating time of 6 minutes under a load of 20 $kg/cm^2$, by using a nozzle having a diameter of 1 mm and a length of 10 mm in a flow tester (Model CFT-500 supplied by Shimadzu Corp.).

Examples 1 through 5 and Comparative Examples 1 through 3

A titanium-lined autoclave having an inner volume of 100 ℓ was charged with 12.89 kg of flaky sodium sulfide having a purity of 60.53% and 30 kg of N-methyl-2-pyrrolidone, and dehydration was effected by heating with stirring in a nitrogen current until the inner temperature reached 204° C. The amount of water was 36.7% in 7.58 kg of the effluent. The loss of hydrogen sulfide during the dehydration step was 1.2 mole% as calculated as sodium sulfide. After completion of the dehydration, the mixture was cooled to 160° C and 14.52 kg of p-dichlorobenzene dissolved in 10 kg of N-methyl-2-pyrrolidone was added. Reaction was carried out at 220° C for 5 hours and at 250° C for 3 hours, and lu the reaction mixture was cooled to 150° C and filtered through a 300-mesh metal net as the filter in the hot state.

Then, 40 kg of N-methyl-2-pyrrolidone was added to the obtained solid and washing was carried out, while stirring, at 150° C for 30 minutes in a nitrogen current and filtration was carried out under a pressure in the hot state. The foregoing operation was similarly carried out two times, and the obtained solid was transferred to the above-mentioned autoclave. Then, 40 kg of N-methyl-2-pyrrolidone was added into the autoclave and the inner atmosphere was replaced by nitrogen, and the molecular weight-increasing reaction was carried out at 240° C for 4 hours. The reaction mixture was cooled to 150° C and then filtered, and 40 kg of methyl ethyl ketone was added to the recovered solid. Washing was carried out, while stirring, at 80° C for 30 minutes, and filtration was carried out under a pressure in the hot state. The foregoing operation was similarly conducted three times to remove the residual N-methyl-2-pyrrolidone. The obtained solid was dried at 120° C under 60 mmHg and washed repeatedly with water to remove sodium chloride formed as the by product. The solid was dried to obtain 10.3 kg of powdery PPS. The melt viscosity of this polymer was 4,350 P.

Then, a predetermined amount of a 50% aqueous solution of hypophosphorous acid or a solution of sodium hypophosphite or calcium hypophosphite in a mixed solvent of water and methanol was added as the coloration-preventing agent to the obtained PPS, and the mixture was thoroughly stirred and then dried to remove water and methanol. The quality and physical properties of the obtained PPS are shown in Table 1.

Example 6

The reaction and the molecular weight-increasing reaction were carried out in the same manner as described in Example 1. Solvent washing with methyl ethyl ketone was not carried out, but the slurry obtained by the molecular weight-increasing reaction was filtered and directly subjected to the water washing treatment. Water washing and filtration were repeated until sodium chloride formed as the by-product was completely removed. The obtained water-containing wet slurry was mixed with a 50% aqueous solution of hypophosphorous acid in an amount corresponding to 0.6% based on the weight of PPS (corresponding to 0.3% as calculated as 100% concentration), and the mixture was sufficiently stirred. Water was removed by drying. The weight of the obtained PPS was 10.1 kg, and the melt viscosity of the PPS was 3,800 P. The physical properties of the obtained PPS are shown in Table 1.

Example 7

The procedures of Example 1 were repeated in the same manner except that 53.78 g of 1,3,5-trichlorobenzene (0.3 mole% based on p-dichlorobenzene) was added at the polymerization reaction and after completion of the reaction, washing with N-methyl-2-pyrrolidone and the molecular weight-increasing reaction were not carried out, whereby 10.1 kg of powdery PPS was obtained. The melt viscosity of the obtained PPS was 2,300 P.

A 50% aqueous solution of hypophosphorous acid in an amount corresponding to 0.6% based on the weight of the PPS was diluted with an appropriate amount of methanol and added to the PPS. The mixture was thoroughly stirred and dried to remove water and methanol.

The characteristics of the obtained PPS are shown in Table 1.

Example 8

To the reaction liquid slurry obtained by carrying out the reaction in the same manner as described in

Example 1 was added 6.1 kg of water, and the temperature was elevated to 250°C in a nitrogen current and the reaction was further conducted for 10 hours. The reaction mixture was cooled to 150°C and filtered, and 40 kg of methyl ethyl ketone was added to the recovered solid. Washing was carried out with stirring at 80°C for 30 minutes and filtration was carried out under a pressure in the hot state. The foregoing washing and filtering operations were conducted three times to remove the residual N-methyl-2-pyrrolidone. The subsequent treatments were carried out in the same manner as described in Example 1 to obtain 10.2 kg of powdery PPS. The melt viscosity of the obtained PPS was 1,700 P.

A 50% aqueous solution of hypophosphorous acid in an amount corresponding to 0.6% based on the weight of the PPS was diluted with an appropriate amount of methanol and added to the PPS. The mixture was thoroughly stirred and then dried to remove water and methanol. The physical properties of the obtained PPS are shown in Table 1.

Comparative Examples 4 through 6

A solution of a coloration-preventing agent other than the coloration-preventing agent of the present invention in acetone was added to the powdery PPS obtained in Example 1, and the mixture was thoroughly stirred and then dried to remove acetone. The physical properties of the obtained PPS are shown in Table 1.

Table 1

| | Coloration-preventing agent | | Physical properties of PPS | | |
|---|---|---|---|---|---|
| | Kind | Amount added | Melt viscosity of powder | Melt viscosity of pellet | Hunter whiteness |
| | | (%) | (P) | (P) | (%) |
| Example 1 | Hypophosphorous acid* | 0.05 | 4,350 | 4,300 | 42 |
| Example 2 | Ditto | 0.3 | 4,350 | 4,200 | 51 |
| Example 3 | Ditto | 1.0 | 4,350 | 4,200 | 55 |
| Example 4 | Sodium hypophosphite | 0.5 | 4,350 | 4,300 | 47 |
| Example 5 | Calcium hypophosphite | 0.5 | 4,350 | 4,350 | 45 |
| Example 6 | Hypophosphorous acid | 0.3 | 4,350 | 4,250 | 45 |
| Example 7 | Ditto | 0.3 | 2,300 | 2,200 | 49 |
| Example 8 | Ditto | 0.3 | 1,700 | 1,700 | 49 |
| Comparative Example 1 | Not added | - | 4,350 | 4,400 | 23 |
| Comparative Example 2 | Hypophosphorous acid | 0.02 | 4,350 | 4,300 | 37 |
| Comparative Example 3 | Ditto | 6 | 4,350 | 4,000 | 55 |
| Comparative Example 4 | 2,6-Di-tert.-butyl-p-cresol | 0.5 | 4,350 | 5,300 | 36 |
| Comparative Example 5 | Triphenyl phosphite | 0.5 | 4,350 | 4,850 | 37 |
| Comparative Example 6 | 2,6-di-tert.-butyl-p-cresol and triphenyl phosphite | 0.3<br>0.2 | 4,350 | 5,400 | 37 |

* as calculated as 100% concentration

As seen from the results shown in Table 1, by incorporating hypophosphorous acid, sodium hypophosphite or calcium hypophosphite, a resin having a high Hunter whiteness can be obtained.

It can also be seen that, when washing with methyl ethyl ketone is carried out to remove N-methyl-2-pyrrolidone (Examples 1 through 3), the Hunter whiteness is especially high. Namely, when the coloration-preventing agent is not used (Comparative Example 1), the Hunter whiteness is 23%, but when hypophosphorous acid is added in an amount of 0.3 phr (Example 2), the Hunter whiteness is 51% and the melt viscosity is not increased at the pelletizing step.

It also is seen that where 2,6-tert.-butyl-p-cresol and triphenyl phosphite, customarily used widely as the coloration-preventing agent, are used in combination (Comparative Example 6), the Hunter whiteness is lower than those obtained when hypophosphorous acid, sodium hypophosphite, and calcium hypophosphite

are used, and the melt viscosity is increased at the pelletizing step.

The polyarylene sulfide resin composition of the present invention is characterized in that degradation or thermal crosslinking of the polymer does not occur at the melt-shaping step, and the coloration is greatly reduced. In general, the Hunter whiteness of the resin composition of the present invention is at least 40%.

## Claims

1. A polyarylene sulfide resin composition comprising 100 parts by weight of a polyarylene sulfide resin and, incorporated therein, 0.03 to 5 parts by weight of at least one hypophosphorous acid compound selected from the group consisting of hypophosphorous acid and alkali metal salts and alkaline earth metal salts of hypophosphorous acid.

2. A polyarylene sulfide resin composition according to claim 1, wherein the polyarylene sulfide resin is a polyphenylene sulfide resin.

3. A polyarylene sulfide resin composition according to claim 1, wherein the hypophosphorous acid compound is selected from the group consisting of hypophosphorous acid, sodium hypophosphite, lithium hypophosphite, potassium hypophosphite, calcium hypophosphite and magnesium hypophosphite.

4. A polyarylene sulfide resin composition according to claim 1, wherein the amount of the hypophosphorous acid compound is 0.1 to 1 part by weight based on 100 parts by weight of the polyarylene sulfide resin.